(19) Europäisches Patentamt
European Patent Office
Office européen des brevets

(11) **EP 3 901 177 A1**

(12) **EUROPEAN PATENT APPLICATION**
published in accordance with Art. 153(4) EPC

(43) Date of publication:
**27.10.2021 Bulletin 2021/43**

(21) Application number: **19899550.8**

(22) Date of filing: **13.12.2019**

(51) Int Cl.:
***C08B 1/08** (2006.01)* ***C08B 11/12** (2006.01)*
***H01M 4/13** (2010.01)* ***H01M 4/139** (2010.01)*
***H01M 4/62** (2006.01)*

(86) International application number:
**PCT/JP2019/049044**

(87) International publication number:
**WO 2020/129862 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.12.2018 JP 2018237295**

(71) Applicant: **Nippon Paper Industries Co., Ltd.**
**Tokyo 114-0002 (JP)**

(72) Inventors:
- **SAKAJIRI, Takayuki**
  **Tokyo 114-0002 (JP)**
- **INOUE, Kazuhiko**
  **Tokyo 114-0002 (JP)**
- **KOMATSU, Akira**
  **Tokyo 114-0002 (JP)**

(74) Representative: **Müller-Boré & Partner**
**Patentanwälte PartG mbB**
**Friedenheimer Brücke 21**
**80639 München (DE)**

# (54) CARBOXYMETHYL CELLULOSE OR SALT THEREOF FOR NON-AQUEOUS ELECTROLYTE SECONDARY BATTERY

(57) The present invention is aimed to provide carboxymethylcellulose or a salt thereof for a nonaqueous electrolyte secondary battery, an electrode composition containing the same for a nonaqueous electrolyte secondary battery, an electrode for a nonaqueous electrolyte secondary battery, and a nonaqueous electrolyte secondary battery, with a small reduction in the capacity even when charging and discharging are repeated, and with high durability. The carboxymethylcellulose or the salt thereof is used as a binder for an electrode of a nonaqueous electrolyte secondary battery, in which the degree of substitution with carboxymethyl of the carboxymethylcellulose or the salt thereof is 0.5 to 1.5, and a thermal rate of change T that is a difference ($W_B$ - $W_A$) between a thermal weight reduction rate $W_A$ at a thermal decomposition start point and a thermal weight reduction rate $W_B$ at a thermal decomposition end point measured by a thermogravimetric-differential thermal analyzer is 45% or lower.

FIG.1

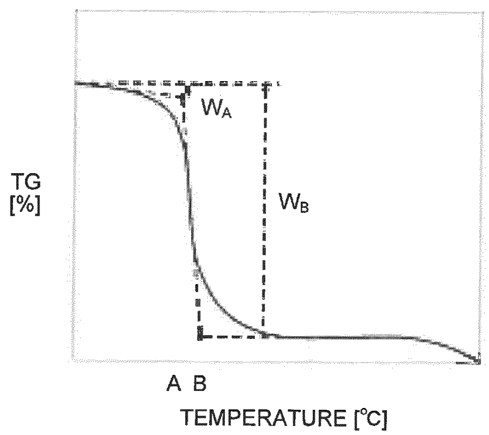


EP 3 901 177 A1

## Description

### Field

The present invention relates to carboxymethylcellulose or a salt thereof for a nonaqueous electrolyte secondary battery, an electrode composition containing the same for a nonaqueous electrolyte secondary battery, an electrode for a nonaqueous electrolyte secondary battery, and a nonaqueous electrolyte secondary battery.

### Background

Nonaqueous electrolyte secondary batteries have been deployed in small devices including portable electric devices such as mobile phones, portable music players, and notebook personal computers as well as large devices such as electric bicycles, hybrid vehicles, and electric vehicles. Thus, performances such as a higher capacity and charge/discharge characteristics at a larger current have been required for nonaqueous electrolyte secondary batteries.

In recent years, in order to further improve the energy density of batteries, lithium metal oxides containing Ni, such as $LiNi_aCO_bAl_{1-a-b}O_2$ and $LiNi_aCo_bMn_{1-a-b}O_2$, have been put into practice, instead of $LiCoO_2$ and $LiMn_2O_4$, as positive electrode active materials.

These devices are premised on that they can be used in various environments, and in terms of storage performance under high temperature environments, cycle performance, and long-term reliability of high power, materials excellent in chemical and electrochemical stability, strength, and corrosion resistance have been sought for as the constituent materials of positive electrodes and negative electrodes. Nonvolatile and nonflammable electrolytes have been developed in terms of improvement in safety performance as nonaqueous electrolytes. However, nonflammable electrolytes have not yet been commercialized because they typically involve reduction in output characteristics, low-temperature performance, and longevity performance.

Nonaqueous electrolyte secondary batteries are thus known to have a higher risk of smoking, firing, and explosion, compared with aqueous batteries, but have excellent battery characteristics. Improvement in durability and safety of nonaqueous electrolyte secondary batteries therefore has been desired.

In such a situation, Patent Literature 1 discloses the use of a special titanium-based oxide as a negative electrode to provide a nonaqueous electrolyte secondary battery with a high capacity and high durability.

Patent Literature 2 discloses the use of a separator subjected to a special process to improve durability.

### Citation List

### Patent Literature

Patent Literature 1: Japanese Patent Application Laid-open No. 2018-101628
Patent Literature 2: Japanese Patent Application Laid-open No. 2017-68900

### Summary

### Technical Problem

Unfortunately, in the nonaqueous electrolyte secondary battery in Patent Literature 1, it is essential to blend a certain titanium-based compound in a negative electrode material. For this reason, when a higher capacity and further output improvement are considered, the degree of freedom in selecting a material is low, and in addition, application to a positive electrode is difficult.

Although Patent Literature 2 describes the development focusing on a separator, there is room for improvement in an electrode composition.

The present invention is then aimed to provide carboxymethylcellulose or a salt thereof for a nonaqueous electrolyte secondary battery, an electrode composition containing the same for a nonaqueous electrolyte secondary battery, an electrode for a nonaqueous electrolyte secondary battery, and a nonaqueous electrolyte secondary battery, with a small reduction in the capacity even when charging and discharging are repeated, and with high durability.

### Solution to Problem

The inventors of the present invention have conducted elaborate studies and found that the problem can be solved by the following [1] to [7].

[1] Carboxymethylcellulose or a salt thereof for use as a binder for an electrode of a nonaqueous electrolyte secondary battery, wherein a degree of substitution with carboxymethyl of the carboxymethylcellulose or the salt thereof is 0.5 to 1.5, and a thermal rate of change T that is a difference ($W_B$-$W_A$) between a thermal weight reduction rate $W_A$ at a thermal decomposition start point and a thermal weight reduction rate $W_B$ at a thermal decomposition end point measured by a thermogravimetric-differential thermal analyzer is 45% or lower.
[2] The carboxymethylcellulose or the salt thereof according to [1], wherein a viscosity (30 rpm, 25°C) of a water dispersion with a solid content of 1% (w/v) of the carboxymethylcellulose or the salt is in a range of 100 to 20,000 mPa·s.
[3] The carboxymethylcellulose or the salt thereof according to [1] or [2], wherein the thermal weight reduction rate $W_A$ at the thermal decomposition start point is 7% or higher.
[4] An electrode composition for a nonaqueous electrolyte secondary battery, the electrode composition comprising the carboxymethylcellulose or the salt thereof according to any one of [1] to [3].
[5] The electrode composition for a nonaqueous electrolyte secondary battery according to [4], wherein an amount of a silicon-based active material contained therein is 10 mass% or higher.
[6] An electrode for a nonaqueous electrolyte secondary battery, the electrode comprising the electrode composition for a nonaqueous electrolyte secondary battery according to [4] or [5] .
[7] A nonaqueous electrolyte secondary battery comprising the electrode composition for a nonaqueous electrolyte secondary battery according to [4] or [5].

Advantageous Effects of Invention

The present invention can provide carboxymethylcellulose or a salt thereof for a nonaqueous electrolyte secondary battery, an electrode composition containing the same for a nonaqueous electrolyte secondary battery, an electrode for a nonaqueous electrolyte secondary battery, and a nonaqueous electrolyte secondary battery, with a small reduction in the capacity even when charging and discharging are repeated, and with high durability.

Brief Description of Drawings

FIG. 1 is a diagram representing the relation between temperature and thermogravimetry (Tg).

Description of Embodiments

[Carboxymethylcellulose]

In the present invention, carboxymethylcellulose or a salt thereof has a structure in which hydroxy groups in glucose residues constituting cellulose are substituted with carboxymethyl ether groups. The carboxymethylcellulose may be in the form of a salt. Examples of the salt of carboxymethylcellulose may include metal salts such as sodium carboxymethylcellulose salt.
In the present invention, cellulose means a polysaccharide having a structure including β-1,4-linked D-glucopyranose (also simply referred to as "glucose residues" or "anhydrous glucose"). Cellulose is usually classified, for example, by its origin, production method, and the like into natural cellulose, regenerated cellulose, fine cellulose, and microcrystalline cellulose obtained by removing amorphous regions.
Examples of the natural cellulose include bleached pulp and unbleached pulp (bleached wood pulp and unbleached wood pulp); linter and purified linter; and cellulose produced by microorganisms such as acetobacter. Examples of raw materials for the bleached pulp and unbleached pulp include, but not limited to, wood, cotton, straw, and bamboo. The bleached pulp and unbleached pulp may be produced by any method, for example, by a mechanical method, a chemical method, or an intermediate method of mechanical and chemical methods in combination. Examples of the bleached pulp and unbleached pulp classified by manufacturing methods include mechanical pulp, chemical pulp, ground pulp, sulfite pulp, and kraft pulp. Paper pulp as well as dissolving pulp may be used. The dissolving pulp is chemically refined pulp, mainly used in the form of a solution in a chemical, and serves as a main raw material for artificial fiber, cellophane, and the like.
Examples of the regenerated cellulose include those obtained by dissolving cellulose in a solvent such as a cuprammonium solution, a cellulose xanthate solution, or a morpholine derivative and then re-spinning the resultant cellulose.
Examples of the fine cellulose include cellulose obtained by subjecting a cellulose-based material, such as the above natural cellulose or regenerated cellulose, to depolymerization (such as acid hydrolysis, alkaline hydrolysis, enzymatic decomposition, explosion, or vibratory ball milling); and cellulose obtained by mechanically processing the above cellulose-based material.

It is important that carboxymethylcellulose or a salt thereof according to the present invention has a degree of substitution with carboxymethyl per anhydrous glucose unit of 0.5 or higher, preferably 0.6 or higher. If the degree of substitution with carboxymethyl is lower than 0.5, there is a risk that the carboxymethylcellulose or the salt thereof does not sufficiently dissolve in water.

In the present description, the anhydrous glucose unit means each individual anhydrous glucose (glucose residue) that constitutes cellulose. The degree of substitution with carboxymethyl (also referred to as the degree of etherification) refers to the ratio of hydroxy groups (-OH) in the glucose residues constituting the cellulose that have been substituted with carboxymethyl ether groups ($-OCH_2COOH$). The degree of substitution with carboxymethyl may be abbreviated as DS.

The upper limit of the degree of substitution with carboxymethyl per anhydrous glucose unit of the carboxymethylcellulose or the salt thereof is 1.5 or lower, preferably 1.1 or lower.

The degree of substitution with carboxymethyl can be determined by measuring the amount of a base such as sodium hydroxide required to neutralize carboxymethylcellulose in a sample. In this case, in the case of a salt of carboxymethylcellulose in which the carboxymethyl ether group is in the form of salt, it is converted, before measurement, into carboxymethylcellulose in which a salt of the carboxymethyl ether group is an acid type. In measurement, back titration using a base or an acid and an indicator such as phenolphthalein can be used in combination if needed.

In the carboxymethylcellulose or the salt thereof according to the present invention, it is important that a thermal rate of change T that is a difference ($W_B$ - $W_A$) between the thermal weight reduction rate $W_A$ at a thermal decomposition start point and the thermal weight reduction rate $W_B$ at a thermal decomposition end point is 45% or lower. When the thermal rate of change T is 45% or lower, the carboxymethylcellulose or the salt thereof is suitable as a binder for an electrode of a nonaqueous electrolyte secondary battery that requires high temperature durability. On the other hand, when the thermal rate of change T exceeds 45%, the carboxymethylcellulose or the salt thereof is not suitable when used for an electrode for a nonaqueous electrolyte secondary battery because the performance as a binder may be deteriorated during drying.

The thermal weight reduction rate $W_A$ at a thermal decomposition start point according to the present invention refers to a thermal weight change rate at a thermal decomposition start point (A) that was measured using a thermal analyzer TG/DTA22 (manufactured by Seiko Instruments Inc.) under a nitrogen atmosphere (100 ml/min), at measurement temperatures of 30 to 500°C and a temperature increase rate of 10°C/min.

The thermal weight reduction rate $W_B$ at a thermal decomposition end point according to the present invention refers to a thermal weight change rate at a thermal decomposition end point (B) that was measured using a thermal analyzer TG/DTA22 (manufactured by Seiko Instruments Inc.) under a nitrogen atmosphere (100 ml/min), at measurement temperatures of 30 to 500°C and a temperature increase rate of 10°C/min.

The thermal weight reduction rate $W_A$ is preferably 7% or higher, more preferably 8% or higher. When the thermal weight reduction rate $W_A$ is 7% or higher, it can be presumed that the carboxymethylcellulose or the salt thereof has fewer aggregates, that is, is uniformly dispersed and therefore suitable for a nonaqueous electrolyte secondary battery.

In the carboxymethylcellulose or the salt thereof according to the present invention, the viscosity of a 1 mass% aqueous solution measured by a Brookfield viscometer at 25°C and 30 rpm is preferably 100 to 20,000 mPa·s, more preferably 1,500 to 15,000 mPa·s, and further preferably 1,700 to 10,000 mPa·s, further more preferably 2,000 to 10,000 mPa ·s. When the viscosity is within the range above, an electrode slurry less likely to precipitate and having excellent coating characteristics can be produced, and thus the carboxymethylcellulose or the salt thereof is suitable for a nonaqueous electrolyte secondary battery.

In the present invention, the method of producing carboxymethylcellulose or the salt thereof is not particularly limited as long as it satisfies predetermined parameter, and a known method of producing carboxymethylcellulose or a salt thereof can be applied. More specifically, the carboxymethylcellulose or the salt thereof according to the present invention can be produced by treating cellulose as a raw material with a mercerizing agent (alkali) to prepare mercerized cellulose (alkali cellulose), followed by adding an etherifying agent to the preparation to allow an etherification reaction.

Any raw material cellulose may be used without limitation within the above-mentioned cellulose. It is preferable to use cellulose with high purity, and is more preferable to use dissolving pulp and linter. Carboxymethylcellulose or a salt thereof with high purity can be obtained by use of these cellulose.

An alkali metal hydroxide such as sodium hydroxide and potassium hydroxide may be used as the mercerizing agent. Monochloroacetic acid, sodium monochloroacetate, and the like may be used as the etherifying agent.

In a method of manufacturing water-soluble common carboxymethylcellulose, the molar ratio between the mercerizing agent and the etherifying agent is generally employed as 2.00 to 2.45 when monochloroacetic acid is used as the etherifying agent. This is because there is a risk that the etherification reaction may not proceed insufficiently if the molar ratio is lower than 2.00, so that unreacted monochloroacetic acid may be left and wasted. And if the ratio is higher than 2.45, a side reaction between the excess mercerizing agent and the monochloroacetic acid may proceed to generate alkali metal glycolate, resulted in uneconomical.

In the present invention, a commercially available product may be used after a process to satisfy predetermined parameters. An example of the commercially available product is the trade name "SUNROSE" (sodium salt of carboxymethylcellulose) manufactured by NIPPON PAPER INDUSTRIES CO., LTD.

[Pulverization Process]

In the present invention, carboxymethylcellulose or a salt thereof that satisfies the predetermined parameters as described above may be used as it is. However, it may be subjected to a pulverization process (pulverized product) as long as the predetermined parameters are satisfied. The pulverization process is usually a mechanical pulverization process performed using a machine. Examples of methods of the pulverization process of carboxymethylcellulose or a salt thereof include dry pulverization methods performed in a powder state and wet pulverization methods performed in a dispersed or dissolved state in a liquid. In the present invention, any one of these methods may be selected.

When an aqueous solution of carboxymethylcellulose or a salt thereof is prepared, gel particles derived from the carboxymethylcellulose or the salt thereof remain as an undissolved substance in the aqueous solution. The mechanical dry or wet pulverization process for the carboxymethylcellulose or the salt thereof makes it possible to miniaturize the gel particles in the aqueous solution of the mechanically pulverized product of the carboxymethylcellulose or the salt thereof. As a result, when an electrode is formed using the aqueous solution of the mechanically pulverized product of the carboxymethylcellulose or the salt thereof, a coarse undissolved substance, which may cause streak-like defects (streaks), separation, and pinholes on a surface of the electrode, can be suppressed.

Examples of the pulverizer that can be used for the mechanical pulverization process include the following dry pulverizers and wet pulverizers.

Examples of the dry pulverizers include a cutting mill, an impact mill, a jet mill, and a media mill. These may be used alone or in combination, or those of the same type may be used in multiple stages. A jet mill is preferable.

Examples of the cutting mill include a mesh mill (manufactured by HORAI Co., Ltd.), ATOMS (manufactured by K. K. Yamamoto Hyakuma Seisakusho), a knife mill (manufactured by PALLMANN Industries, Inc.), a granulator (manufactured by HERBOLD), and a rotary cutter mill (manufactured by NARA MACHINERY Co., Ltd.).

Examples of the impact mill include a pulverizer (manufactured by Hosokawa Micron Corporation), a fine impact mill (manufactured by Hosokawa Micron Corporation), a super micron mill (manufactured by Hosokawa Micron Corporation), a sample mill (manufactured by Seishin Enterprise Co., Ltd.), a bantam mill (manufactured by Seishin Enterprise Co., Ltd.), an atomizer (manufactured by Seishin Enterprise Co., Ltd.), a tornado mill (NIKKISO Co., Ltd.), a turbo mill (manufactured by TURBO KOGYO CO., LTD.), and a bevel impactor (manufactured by AIKAWA Iron Works Co., Ltd.).

Examples of the jet mill include a CGS-type jet mill (manufactured by Mitsui Mining Co., Ltd.), a jet mill (manufactured by Sansho Industry Co., Ltd.), EBARA jet micronizer (manufactured by EBARA CORPORATION), Ceren Miller (manufactured by MASUKO SANGYO Co., Ltd.), and a supersonic jet mill (manufactured by Nippon Pneumatic Mfg. Co., Ltd.).

Examples of the media mill include a vibratory ball mill.

Examples of the wet pulverizer include Mass Collider (manufactured by MASUKO SANGYO Co., Ltd.), a highpressure homogenizer (manufactured by SANMARU MACHINERY Co., Ltd.), and a media mill. Examples of the media mill include a bead mill (manufactured by AIMEX Co., Ltd.).

[Particle Size of Carboxymethylcellulose]

In the present invention, the particle size of carboxymethylcellulose or a salt thereof is preferably smaller. More specifically, the value of the volume cumulative 100% particle size (in the present description, hereinafter may be referred to as "maximum particle size") measured by a laser diffraction-scattering particle size distribution meter using methanol as a dispersant is preferably smaller than 50 μm, more preferably smaller than 49 μm. When the maximum particle size of carboxymethylcellulose or a salt thereof is 50 μm or larger, an unsolved product in the aqueous solution of carboxymethylcellulose or a salt thereof tends to increase.

In the present invention, carboxymethylcellulose or a salt thereof may be subjected to a granulation process. This process makes the handling easy. In a granulation process, carboxymethylcellulose or a salt thereof may have the maximum particle size of 50 μm or larger. However, the maximum particle size of carboxymethylcellulose or a salt thereof before a granulation process is preferably smaller than 50 μm.

The lower limit of the maximum particle size is not particularly limited. The smaller size is more preferable as long as the maximum particle size exceeds zero.

The volume cumulative 50% particle size (hereinafter referred to as average particle size) of carboxymethylcellulose or a salt thereof measured by a laser diffraction-scattering particle size distribution meter using methanol as a dispersion medium is typically 30 μm or smaller, preferably 20 μm or smaller, and more preferably 18 μm or smaller. The lower limit of the average particle size is typically, but not limited to, 5 μm or larger, preferably 10 μm or larger, and more preferably 12 μm or larger.

In the present invention, carboxymethylcellulose or a salt thereof may be classified based on the particle size (preferably, the maximum particle size). The classification means a process of sieving and separating target particles into particles equal to or larger than a certain particle size and particles equal to or smaller than a certain particle size.

Preferably, the classification is performed based on the case that the maximum particle size is smaller than 50 μm or the case that the maximum particle size is 50 μm or larger. Thus, carboxymethylcellulose or a salt thereof with the maximum particle size of smaller than 50 μm can be selectively collected.

When the pulverized product of carboxymethylcellulose or a salt thereof is used as the carboxymethylcellulose or the salt thereof, the above classification may be performed at any timing, may be performed during the pulverization process, or may be performed after the end of the pulverization process.

The classification may be performed by any known methods, for example, using a dry classifier or a wet classifier. Examples of the dry classifier include a cyclone classifier, a DS separator, a turbo classifier, a micro separator, and an air separator. Examples of the wet classifier include a liquid cyclone classifier, a centrifugal settler, and a hydro-oscillator. A dry classifier is preferable, and a cyclone classifier is more preferable.

[Nonaqueous Electrolyte Secondary Battery]

In the present invention, the carboxymethylcellulose or the salt thereof has preferable characteristics as a binder for an electrode of a nonaqueous electrolyte secondary battery. An aqueous solution including carboxymethylcellulose or a salt thereof is generally used as a binder for an electrode of a nonaqueous electrolyte secondary battery.

The concentration of carboxymethylcellulose or a salt thereof in an aqueous solution of carboxymethylcellulose or a salt thereof is typically 0.1 to 10 mass%, preferably 0.2 to 4 mass%, more preferably 0.5 to 2 mass%.

The conditions to prepare the aqueous solution of carboxymethylcellulose or a salt thereof are not practically limited. The aqueous solution is prepared, for example, by adding carboxymethylcellulose or a salt thereof to water (for example, distilled water, purified water, tap water) and stirring the mixture as needed to be dissolved.

In the present invention, carboxymethylcellulose or a salt thereof may constitute, as a binder for an electrode, an electrode composition together with an active material for an electrode. That is, an embodiment of the electrode composition for a nonaqueous electrolyte secondary battery according to the present invention contains carboxymethylcellulose or a salt thereof and an electrode active material. The property of the electrode composition is not limited and may be slurry or paste.

In the present invention, the amount of carboxymethylcellulose or a salt thereof contained in the electrode composition is preferably 0.1 mass% to 4.0 mass% with respect to the entire electrode composition.

The electrode composition may include a variety of components depending on whether the electrode formed with the composition is a negative electrode or a positive electrode.

An electrode composition for a negative electrode generally contains a negative electrode active material. Examples of the negative electrode active material include graphite materials such as graphite (natural graphite and artificial graphite), acetylene black, coke, and carbon fibers; elements that can be alloyed with lithium, specifically, elements such as Al, Si, Sn, Ag, Bi, Mg, Zn, In, Ge, Pb, and Ti; compounds containing the above elements that can be alloyed with lithium; composite materials of the above elements that can be alloyed with lithium and compounds containing the elements, and carbon and/or graphite materials; and nitrides containing lithium. Among them, graphite materials and silicon active materials (Si) are preferable, and a mixed composition of graphite and a silicon-based active material is more preferable.

An electrode composition for a positive electrode generally contains a positive electrode active material. As a positive electrode active material, $LiMe_xO_y$-based positive electrode active material (where Me is a transition metal including at least one of Ni, Co, and Mn, and x and y are arbitrary numbers) is preferable one. Preferable examples of the $LiMe_xO_y$-based positive electrode active material include, but not limited to, $LiMn_2O_4$-based, $LiCoO_2$-based, and $LiNiO_2$-based positive electrode active materials. Examples thereof include compounds having main skeletons of $LiMnO_2$, $LiMn_2O_4$, $LiCoO_2$, or $LiNiO_2$ substituted with various metal elements. The $LiMn_2O_4$-based, $LiCoO_2$-based, and $LiNiO_2$-based positive electrode active materials can provide lithium ion secondary batteries having high charge-discharge efficiency and good cycle characteristics because they have excellent performance in diffusion of electrons and lithium ions and the like as positive electrode active materials. Among them, the $LiCoO_2$-based positive electrode active material is preferable, and $LiCoO_2$ is more preferable. The $LiMn_2O_4$-based positive electrode active material is also preferably used in terms of its low material cost.

The amount of the electrode active material contained in the electrode composition is typically 90 to 99 mass%, preferably 91 to 99 mass%, more preferably 92 to 99 mass%. However, when a silicon-based active material is used as the electrode active material, the amount of the silicon-based active material contained therein is preferably 10 mass% or higher with respect to the total amount of the electrode active material.

When a silicon-based active material is contained in the electrode active material, it is preferable that the carboxymethylcellulose or the salt thereof according to the present invention is mainly present in the form of carboxymethylcellulose salt.

Such a form of carboxymethylcellulose salt can be represented by the amount of acidic carboxy groups. In the carboxymethylcellulose or the salt thereof according to the present invention, the amount of acidic carboxy groups is preferably smaller than 1.150 mmol/g, more preferably 1.140 mmol/g or smaller, further preferably 1.135 mmol/g or smaller.

The lower limit is, but not limited to, preferably 0.1 mmol/g or larger, more preferably 0.2 mmol/g or larger, further preferably 0.5 mmol/g or larger.

When the amount of acidic carboxy groups in the carboxymethylcellulose or the salt thereof according to the present invention is within the preferable range above, the carboxymethylcellulose or the salt thereof is easily anionized in the electrode composition. Therefore, the dispersiveness of the active material is improved due to charge repulsion in the electrode composition.

In particular, in a mixed composition of negative electrode active materials with different specific gravities (for example, graphite and a silicon-based active material), excellent dispersiveness is exhibited and an excellent electrode layer with no defects is easily formed when applied on a collector.

Here, the amount of acidic carboxy groups of carboxymethylcellulose or a salt thereof can be calculated using Equation (A), in which x (g) of carboxymethylcellulose or a salt thereof in an aqueous solution is prepared, the electrical conductivity of the aqueous solution is measured while an aqueous sodium hydroxide solution at a predetermined concentration y (N) is added dropwise, and a (mL) of the amount of consumption of aqueous sodium hydroxide solution is measured in weak acidity stage in which the change of electrical conductivity is mild, that is, in the neutralization stage of the acidic carboxy groups.

The amount of acidic carboxy groups [mmol/g] = a [mL] × y [N]/the mass x [g] of carboxymethylcellulose or a salt thereof ... (A)

Specifically, the amount of acidic carboxy groups of carboxymethylcellulose or a salt thereof can be measured by the method below.

An aqueous solution is prepared by adding 100 mL of ion-exchange water to 0.1 g of carboxymethylcellulose or a salt thereof, and to this aqueous solution, an aqueous sodium hydroxide solution with a concentration of 0.1 N is added dropwise at a rate of 0.5 mL/min while the electrical conductivity is measured. Subsequently, a titration curve is created by plotting the electrical conductivity to the amount of the added aqueous sodium hydroxide solution.

Subsequently, in the titration curve, a first asymptote is created by the least squares method from the points in a range in which the change of electrical conductivity is mild, and a second asymptote is created by the least squares method from the points in a range in which the change of electrical conductivity is steep. Thereafter, the amount of the added aqueous sodium hydroxide solution at the intersection of the first asymptote and the second asymptote is considered to be the amount a (mL) of aqueous sodium hydroxide solution consumed in the neutralization process of acidic carboxy groups. The amount of acidic carboxy groups is calculated by Equation (A) from the mass (g) of carboxymethylcellulose or a salt thereof, the concentration (N) of sodium hydroxide, and the amount a (mL) of aqueous sodium hydroxide solution, used in titration.

As the electrical conductivity, a numerical value obtained from a conductometer may be used as it is. Alternatively, the electrical conductivity corrected by multiplying the numerical value obtained from a conductometer by a coefficient calculated from Equation (B) below may be obtained, and a first asymptote and a second asymptote may be obtained using the corrected electrical conductivity.

$$\text{(Coefficient)} = (V0\ (\text{mL}) + v\ (\text{mL}))/V0\ (\text{mL}) \quad \ldots \text{(B)}$$

In the equation above, V0 is the amount of an aqueous solution of carboxymethylcellulose or a salt thereof before an aqueous sodium hydroxide solution is added, and v is the amount of the added aqueous sodium hydroxide solution at each value of electrical conductivity.

The electrode composition for a positive electrode preferably includes a conductive material. The electrode composition including a conductive material improves the characteristics of the produced positive electrode. The conductive material also can ensure the electrical conductivity of a positive electrode. Examples of the conductive material include a mixture of one or more of carbon materials such as carbon black, acetylene black, and graphite. Among those, carbon black and acetylene black are preferable.

The electrode composition may contain a binder other than an aqueous solution of carboxymethylcellulose or a salt thereof. Examples of the binder for the electrode composition for a negative electrode include synthetic rubber-based binders. One or more selected from the group consisting of styrene-butadiene rubber (SBR), nitrile-butadiene rubber, methyl methacrylate-butadiene rubber, chloroprene rubber, carboxy modified styrene-butadiene rubber, and latexes of these synthetic rubbers can be used as the synthetic rubber-based binder. Among them, styrene-butadiene rubber (SBR) is preferable. Examples of the binder for the electrode composition for a positive electrode include the synthetic rubber-based binders listed above as the binder for a negative electrode, as well as polytetrafluoroethylene (PTFE). Among them, polytetrafluoroethylene (PTFE) is preferable.

The amount of the binder contained in the electrode composition is generally 1 to 10 mass%, preferably 1 to 6 mass%, and more preferably 1 to 2 mass%.

The conditions of producing the electrode composition are not particularly limited. For example, a different component that constitutes the electrode composition is added to an aqueous solution of carboxymethylcellulose or a salt thereof to be mixed while being stirred as needed.

The form of the electrode composition is not also particularly limited. Examples of the form include liquid, paste, and a slurry, and either of them may be employed.

The electrode composition is used for producing an electrode for a nonaqueous electrolyte secondary battery. An electrode for a nonaqueous electrolyte secondary battery may be produced, for example, by depositing the electrode composition on a collecting substrate (collector). Examples of the deposition method include blade coating, bar coating, and die coating, and blade coating is preferable. Examples of the blade coating include casting an electrode composition on a collecting substrate using a coating device such as a doctor blade. The examples of the deposition method, not only limited to the above specific examples, but also include the deposition method, the electrode composition is discharged and applied by an extrusion-type injector with a slot nozzle onto a running collecting substrate wound around on a backup roll. In blade coating, casting may be followed by drying by heating (at a heating temperature of, for example, 80 to 120°C for a heating time of, for example, 4 to 12 hours) as needed, and applying pressure with a roller press.

As the collecting substrate, any conductor that does not produce a fatal chemical change in the constructed battery can be used.

As a collecting substrate for a negative electrode, for example, stainless steel, nickel, copper, titanium, carbon, copper or stainless steel to which carbon, nickel, titanium, or silver is stuck by surface treatment can be used. Among them, copper or copper alloy is preferable. Copper is the more preferable.

Examples of the material of a collecting substrate for a positive electrode include metals such as aluminum and stainless steel. Aluminum is preferable. Examples of the shape of the collecting substrate include mesh, punched metal, form metal, and foil processed into a plate shape. A foil processed into a plate shape is preferable.

The shape of an electrode for a nonaqueous electrolyte secondary battery formed of the electrode composition is not particularly limited. The electrode is generally in a sheet-like shape. The thickness of a sheet-like electrode plate (the thickness of the mixture layer formed of the electrode composition, excluding the collecting substrate) is typically 30 to 150 $\mu$m, although it is difficult to uniquely define the thickness because it depends on the composition and production conditions of the composition.

The electrode formed of the above composition can be used as an electrode of a nonaqueous electrolyte secondary battery. In other words, the present invention also provides a nonaqueous electrolyte secondary battery having an electrode formed of the composition above. The nonaqueous electrolyte secondary battery may have a structure in which a positive electrode and a negative electrode are alternately stacked with a separator interposed therebetween and wound multiple times. The separator is usually impregnated with a nonaqueous electrolyte. As this negative electrode and/or positive electrode, a negative electrode and/or a positive electrode formed of the electrode composition described above can be used. In such a nonaqueous electrolyte secondary battery, carboxymethylcellulose or a salt thereof with high solubility is used, and the process such as filtration by a filter can be eliminated, leading to high productivity. In addition, the initial irreversible capacity is significantly improved, thereby achieving high battery characteristics.

## Examples

Although the embodiments of the present invention will be described below with examples, the present invention is not limited by those examples. In the examples, "parts" means parts by mass unless otherwise specified.

In the present description, each indicator is measured by the following method.

<Thermal weight reduction rate>

Carboxymethylcellulose or a salt thereof was measured using a thermal analyzer TG/DTA22 (manufactured by Seiko Instruments Inc.) under a nitrogen atmosphere (100 ml/min), at measurement temperatures of 30 to 500°C, and a temperature increase rate of 10°C/min. The thermal weight change rate at a decomposition start point (A) is denoted by $W_A$, and the thermal weight change rate at a decomposition end point (B) is denoted by $W_B$.

<Viscosity>

A water dispersion was prepared by measuring out carboxymethylcellulose or a salt thereof into a 1000 ml volume of glass beaker and dispersing it in 900 ml of distilled water such that the solid content was 1% (w/v). The water dispersion was stirred using a stirrer at 25°C at 600 rpm for 3 hours. Subsequently, the viscosity was measured after 3 minutes in accordance with the method JIS-Z-8803 using a Brookfield viscometer (manufactured by Toki Sangyo Co., Ltd.) with a No. 1 rotor at a rotation speed of 30 rpm.

<Measurement of Maximum Particle Size, Average Particle Size, and Particle Size Distribution>

The maximum particle size and the average particle size of carboxymethylcellulose were measured by a laser diffraction/scattering particle size distribution meter (Microtrac Model-9220-SPA, manufactured by Nikkiso CO., Ltd.). As used herein, the maximum particle size is the value of the volume cumulative 100% particle size, and the average particle size is the value of the volume cumulative 50% particle size. In measurement, a sample dispersed in methanol and subjected to an ultrasonic process for at least 1 minute or longer was measured.

[Production Example 1]

To a biaxial kneader at a rotation speed adjusted to 100 rpm, 550 parts of isopropyl alcohol (IPA) and an aqueous sodium hydroxide solution in which 40 parts of sodium hydroxide were dissolved in 80 parts of water were added, and 100 parts by dry mass of linter pulp dried at 100°C for 60 minutes was introduced. Mercerized cellulose was prepared by stirring and mixing the mixture at 30°C for 90 minutes. While the mixture was further stirred, 50 parts of monochloroacetic acid was added, and the mixture was stirred for 30 minutes. Thereafter, the temperature was increased to 70°C to allow a carboxymethylation reaction for 90 minutes. After the end of the reaction, the mixture was neutralized with acetic acid to a pH of about 7, followed by drainage, drying, and pulverization to obtain a sodium salt of carboxymethylcellulose (CMC1) with an average particle size of 15 μm, a maximum particle size of 45 μm, a degree of substitution with carboxymethyl of 0.65, and an amount of acidic carboxy groups of 1.125 mmol/g.

The resultant sodium salt of carboxymethylcellulose was dispersed in water to obtain a 1% (w/v) water dispersion (water dispersion of CMC1). The viscosity measured by the method described above was 4,700 mPa ·s.

[Production Example 2]

To a biaxial kneader at a rotation speed adjusted to 100 rpm, 650 parts of isopropyl alcohol (IPA) and an aqueous sodium hydroxide solution in which 60 parts of sodium hydroxide were dissolved in 100 parts of water were added, and 100 parts by dry mass of linter pulp dried at 100°C for 60 minutes was introduced. Mercerized cellulose was prepared by stirring and mixing the mixture at 30°C for 90 minutes. While the mixture was further stirred, 70 parts of monochloroacetic acid was added, and the mixture was stirred for 30 minutes. Thereafter, the temperature was increased to 70°C to allow a carboxymethylation reaction for 90 minutes. After the end of the reaction, the mixture was neutralized with acetic acid to a pH of about 7, followed by drainage, drying, and pulverization to obtain a sodium salt of carboxymethylcellulose (CMC2) with an average particle size of 13 μm, a maximum particle size of 42 μm, a degree of substitution with carboxymethyl of 0.90, and an amount of acidic carboxy groups of 1.130 mmol/g.

The resultant sodium salt of carboxymethylcellulose was dispersed in water to obtain a 1% (w/v) water dispersion (water dispersion of CMC2). The viscosity measured by the method described above was 1,890 mPa ·s.

[Production Example 3]

To a biaxial kneader at a rotation speed adjusted to 100 rpm, 600 parts of isopropyl alcohol (IPA) and an aqueous sodium hydroxide solution in which 55 parts of sodium hydroxide were dissolved in 100 parts of water were added, and 100 parts by dry mass of linter pulp dried at 100°C for 60 minutes was introduced. Mercerized cellulose was prepared by stirring and mixing the mixture at 30°C for 90 minutes. While the mixture was further stirred, 65 parts of monochloroacetic acid was added, and the mixture was stirred for 30 minutes. Thereafter, the temperature was increased to 70°C to allow a carboxymethylation reaction for 90 minutes. After the end of the reaction, the mixture was neutralized with acetic acid to a pH of about 7, followed by drainage, drying, and pulverization to obtain a sodium salt of carboxymethylcellulose (CMC3) with an average particle size of 16 μm, a maximum particle size of 47 μm, a degree of substitution with carboxymethyl of 0.85, and an amount of acidic carboxy groups of 1.119 mmol/g.

The resultant sodium salt of carboxymethylcellulose was dispersed in water to obtain a 1% (w/v) water dispersion (water dispersion of CMC3). The viscosity measured by the method described above was 4,600 mPa ·s.

[Production Example 4]

To a biaxial kneader at a rotation speed adjusted to 100 rpm, 600 parts of isopropyl alcohol (IPA) and an aqueous sodium hydroxide solution in which 38 parts of sodium hydroxide were dissolved in 80 parts of water were added, and 100 parts by dry mass of linter pulp dried at 100°C for 60 minutes was introduced. Mercerized cellulose was prepared by stirring and mixing the mixture at 30°C for 90 minutes. While the mixture was further stirred, 46 parts of monochloroacetic acid was added, and the mixture was stirred for 30 minutes. Thereafter, the temperature was increased to 70°C to allow a carboxymethylation reaction for 90 minutes. After the end of the reaction, the mixture was neutralized with acetic acid to a pH of about 7, followed by drainage, drying, and pulverization to obtain a sodium salt of carboxymethylcellulose (CMC4) with an average particle size of 17 μm, a maximum particle size of 49 μm, a degree of substitution with carboxymethyl of 0.70, and an amount of acidic carboxy groups of 1.135 mmol/g.

The resultant sodium salt of carboxymethylcellulose was dispersed in water to obtain a 1% (w/v) water dispersion (water dispersion of CMC4). The viscosity measured by the method described above was 7,900 mPa ·s.

[Production Example 5]

To a biaxial kneader at a rotation speed adjusted to 100 rpm, 450 parts of isopropyl alcohol (IPA) and an aqueous sodium hydroxide solution in which 15 parts of sodium hydroxide were dissolved in 80 parts of water were added, and 100 parts by dry mass of linter pulp dried at 100°C for 60 minutes was introduced. Mercerized cellulose was prepared by stirring and mixing the mixture at 30°C for 90 minutes. While the mixture was further stirred, 20 parts of monochloroacetic acid was added, and the mixture was stirred for 30 minutes. Thereafter, the temperature was increased to 70°C to allow a carboxymethylation reaction for 90 minutes. After the end of the reaction, the mixture was neutralized with acetic acid to a pH of about 7, followed by drainage, drying, and pulverization to obtain a sodium salt of carboxymethylcellulose (CMC5) with an average particle size of 21 μm, a maximum particle size of 105 μm, a degree of substitution with carboxymethyl of 0.30, and an amount of acidic carboxy groups of 1.131 mmol/g.

The resultant sodium salt of carboxymethylcellulose was dispersed in water to obtain a 1% (w/v) water dispersion (water dispersion of CMC5). The viscosity measured by the method described above was 150 mPa ·s.

[Example 1]

<Fabrication of Negative Electrode Plate>

Graphite powder (manufactured by Hitachi Chemical Company, Ltd.), acetylene black (manufactured by Strem Chemicals, Inc.), carboxymethylcellulose (CMC1), and styrene-butadiene rubber (SBR, manufactured by JSR Corporation, Product Number S2910(E)-12-Na) were mixed such that the solid content weight ratio was 97:0.5:1.0:1.5. Subsequently, water was added such that the slurry concentration was 45.6 mass%, and the mixture was stirred well using MAZERUSTAR (manufactured by Kurabo Industries Ltd., KK-250S) to prepare a slurry. This slurry was applied by an applicator to a copper foil (manufactured by Furukawa Electric Co., Ltd., NC-WS) of 320 mm in length × 170 mm in width × 17 μm in thickness and air-dried for 30 minutes, and thereafter dried with a drier at 60°C for 30 minutes. The dried product was pressed using a compact tabletop roll press (manufactured by TESTER SANGYO CO., LTD., SA-602) under a load of 5 kN at a roll peripheral speed of 50 m/min at 25°C to obtain a negative electrode plate 1 with a coating amount of 62.9 g/$m^2$ and an effective discharge capacity of 330 mAh/g.

<Fabrication of Coin-Type Nonaqueous Electrolyte Secondary Battery>

The resultant negative electrode plate 1 and a $LiCoO_2$ positive electrode plate (manufactured by Hohsen Corp., a coating amount of 110.2 g/$m^2$, an effective discharge capacity of 145 mAh/g) were punched out to form a circular shape with a diameter of 16 mm, and the punched negative electrode plate and positive electrode plate were vacuum-dried at 120°C for 12 hours.

Similarly, a separator (manufactured by CS Technology Co., Ltd., a polypropylene separator with a thickness of 20 μm) was punched out to form a circular shape with a diameter of 17 mm and vacuum-dried at 60°C for 12 hours.

The negative electrode plate 1 was put into a stainless steel circular dish-shaped casing with a diameter of 20.0 mm, and then the separator, the positive electrode plate, a spacer (a diameter of 15.5 mm and a thickness of 1 mm), and a stainless steel washer (manufactured by Hohsen Corp.) were deposited in this order. Subsequently, 300 μl of an electrolyte (1 mol/l of $LiPF_6$, a volume ratio of ethylene carbonate and diethyl carbonate of 1:1) was added to the circular dish-shaped casing. A stainless steel cap was put on this casing with a polypropylene packing interposed therebetween, and the casing was sealed with a coin cell caulking machine (manufactured by Hohsen Corp.) to obtain a coin-type nonaqueous electrolyte secondary battery 1.

[Example 2]

A negative electrode plate 2 with a coating amount of 49.6 g/m$^2$ and an effective discharge capacity of 417 mAh/g was obtained similarly to Example 1, except that a powder mixture of graphite powder and silica powder (Si) in a weight ratio of 9:1 was used instead of graphite powder. A coin-type nonaqueous electrolyte secondary battery 2 was fabricated using the negative electrode plate 2 by a method similar to that in Example 1.

[Example 3]

A negative electrode plate 3 and a coin-type nonaqueous electrolyte secondary battery 3 were fabricated similarly to Example 2 except that CMC2 was used instead of CMC1.

[Example 4]

A negative electrode plate 4 and a coin-type nonaqueous electrolyte secondary battery 4 were fabricated similarly to Example 2 except that CMC3 was used instead of CMC1.

[Example 5]

A negative electrode plate 5 and a coin-type nonaqueous electrolyte secondary battery 5 were fabricated similarly to Example 2 except that CMC4 was used instead of CMC1.

[Comparative Example 1]

A negative electrode plate 6 and a coin-type nonaqueous electrolyte secondary battery 6 were fabricated similarly to Example 2 except that CMC5 was used instead of CMC1.

The details of the types of CMCs used in Examples 1 to 5 and Comparative Example 1, DS, the thermal weight change rate $W_A$ at a thermal decomposition start point (A), the thermal weight change rate $W_B$ at a thermal decomposition end point (B), the thermal rate of change T, viscosity, and the Si content are listed in Table 1 below.

[Table 1]

| | Electrode composition | | | | | | |
|---|---|---|---|---|---|---|---|
| | CMC | | | | | | Amount of Si (mass%) |
| | Type | DS | Thermal weight reduction rate $W_A$ | Thermal weight reduction rate $W_B$ | Thermal rate of change T ($W_B$-$W_A$) | Viscosity (mPa ·s) | |
| Example 1 | CMC1 | 0.65 | 13.1 | 52.7 | 39.6 | 4700 | 0 |
| Example 2 | CMC1 | 0.65 | 13.1 | 52.7 | 39.6 | 4700 | 10 |
| Example 3 | CMC2 | 0.90 | 13.6 | 50.1 | 36.5 | 1890 | 10 |
| Example 4 | CMC 3 | 0.85 | 9.1 | 47.7 | 38.6 | 4600 | 10 |
| Example 5 | CMC4 | 0.70 | 8.8 | 51.3 | 42.5 | 7900 | 10 |
| Comparative Example 1 | CMC5 | 0.30 | 5.8 | 54.3 | 48.5 | 150 | 10 |

The nonaqueous electrolyte secondary batteries produced in Examples 1 to 5 and Comparative Example 1 were evaluated by conducting an evaluation test described below. The evaluation results are listed in Table 2.

<Evaluation Method>

[Impedance]

The coin-type nonaqueous electrolyte secondary batteries obtained in Examples and Comparative Example were charged using BTS2004 from NAGANO Co., Ltd. under conditions: CC-CV charge, CC current 0.2 C, CV voltage 4.2 V, and termination current 0.02 C. Subsequently, discharging was performed at a constant current of 0.2 C and a termination voltage of 3.0 V.

Subsequently, a VSP electrochemical measurement system from Bio-Logic Science Instruments was used with a thermostatic bath at 25°C and an OCV (open circuit voltage) of 0 V, and an AC voltage superimposed with an amplitude of 10 mV was applied from 1 MHz to 0.1 Hz to determine an impedance (Ω) after initial charge/discharge from response current. Subsequently, charging was performed by the CC-CV method under conditions: CC current 1.0 C, CV voltage 4.2 V, and termination current 0.1 C, and thereafter the impedance (Ω) after 1C charging was determined similarly.

Furthermore, after discharging was performed with a termination voltage of 3.0 V and a constant current of 1.0 C, the impedance (Ω) after 1C discharging was determined similarly.

As used herein, 1C means the setting in which charging is terminated in one hour.

An evaluation was conducted based on the obtained impedance according to the following criterion.

A: impedance (Ω) of lower than 5
B: impedance (Ω) of 5 or higher and lower than 10
C: impedance (Ω) of 10 or higher and lower than 20
D: impedance (Ω) of 20 or higher

The impedance (internal resistance) is a numerical value that influences a lithium ion transport reaction process in charge and discharge reactions of a lithium ion secondary battery. The lower the impedance is, the better the battery performance is.

[Discharge Capacity (Charge/Discharge Rate Test)]

A charge/discharge rate test was performed using BTS2004 from NAGANO Co., Ltd. with a thermostatic bath at 25°C, and using the coin-type nonaqueous electrolyte secondary batteries after the impedance test. Charge and discharge performed in the order of a charge process → a discharge process was set as one cycle, and 52 cycles were carried out.

As the condition of the charge process, the constant current constant voltage (CC-CV) method (CC current 0.2 C, CV voltage 4.2 V, and termination current 0.02 C) was employed in all cycles.

As the condition of the discharge process, the termination voltage was set to 3.0 V. The initial one cycle was performed at a constant current of 0.2 C in the discharge process, and the discharge capacity (mAh/g) after one cycle was measured after discharge.

Up to the subsequent 52nd cycle, the constant current in the discharge process was set as described below, and the discharge capacity (mAh/g) was measured after discharge in each cycle.

(Constant Current in Discharge process in Each Cycle)

2 to 10 cycles: constant current 0.2 C in the discharge process
11 to 20 cycles: constant current 1 C in the discharge process
21 cycle: constant current 0.2 C in the discharge process
22 to 31 cycles: constant current 2 C in the discharge process
32 cycle: constant current 0.2 C in the discharge process
33 to 42 cycles: constant current 3 C in the discharge process
43 to 52 cycles: constant current 0.2 C in the discharge process

[Capacity Retention Ratio]

The capacity retention ratio was calculated from the discharge capacity (mAh/g) in each cycle test described above, according to the formula "capacity retention ratio = discharge capacity (mAh/g) after A cycle/discharge capacity (mAh/g) after B cycle × 100", and an evaluation was conducted according to the following criterion.

(In the 1C capacity retention ratio, A = 11/B = 20, in the 2C capacity retention ratio, A = 22/B = 31, in the 3C capacity retention ratio, A = 33/B = 42, and in the capacity retention ratio before and after the charge/discharge rate test, A = 52/B = 1.)

A: capacity retention ratio of 90% or higher.
B: capacity retention ratio of lower than 90% and 80% or higher.
C: capacity retention ratio of lower than 80% and 70% or higher.
D: capacity retention ratio of lower than 70%.

[Table 2]

| | Evaluation | | | | | | | | |
|---|---|---|---|---|---|---|---|---|---|
| | Discharge capacity (mAh/g) | | Capacity retention ratio | | | | Impedance (Ω) | | |
| | After 1 cycle | After 52 cycles | Capacity retention ratio 1C (%) | Capacity retention ratio 2C (%) | Capacity retention ratio 3C(%) | Before and after charge/ discharge rate test(%) | After initial charge/ discharge | After 1C charge | After 1C discharge |
| Example 1 | 216 | 187 | A | B | C | B | B | B | B |
| Example 2 | 253 | 217 | A | A | B | B | B | B | B |
| Example 3 | 250 | 211 | A | A | B | B | B | B | B |
| Example 4 | 246 | 216 | A | A | B | B | A | A | B |
| Example 5 | 251 | 221 | A | A | B | B | B | B | B |
| Comparative Example 1 | 171 | 123 | D | D | D | C | D | D | D |

## Claims

1. Carboxymethylcellulose or a salt thereof for use as a binder for an electrode of a nonaqueous electrolyte secondary battery, wherein

   a degree of substitution with carboxymethyl of the carboxymethylcellulose or the salt thereof is 0.5 to 1.5, and a thermal rate of change T that is a difference ($W_B$-$W_A$) between a thermal weight reduction rate $W_A$ at a thermal decomposition start point and a thermal weight reduction rate $W_B$ at a thermal decomposition end point measured by a thermogravimetric-differential thermal analyzer is 45% or lower.

2. The carboxymethylcellulose or the salt thereof according to claim 1, wherein a viscosity (30 rpm, 25°C) of a water dispersion with a solid content of 1% (w/v) of the carboxymethylcellulose or the salt is in a range of 100 to 20,000 mPa ·s.

3. The carboxymethylcellulose or the salt thereof according to claim 1 or 2, wherein the thermal weight reduction rate $W_A$ at the thermal decomposition start point is 7% or higher.

4. An electrode composition for a nonaqueous electrolyte secondary battery, the electrode composition comprising the carboxymethylcellulose or the salt thereof according to any one of claims 1 to 3.

5. The electrode composition for a nonaqueous electrolyte secondary battery according to claim 4, wherein an amount of a silicon-based active material contained therein is 10 mass% or higher.

6. An electrode for a nonaqueous electrolyte secondary battery, the electrode comprising the electrode composition for a nonaqueous electrolyte secondary battery according to claim 4 or 5.

7. A nonaqueous electrolyte secondary battery comprising the electrode composition for a nonaqueous electrolyte secondary battery according to claim 4 or 5.

FIG.1

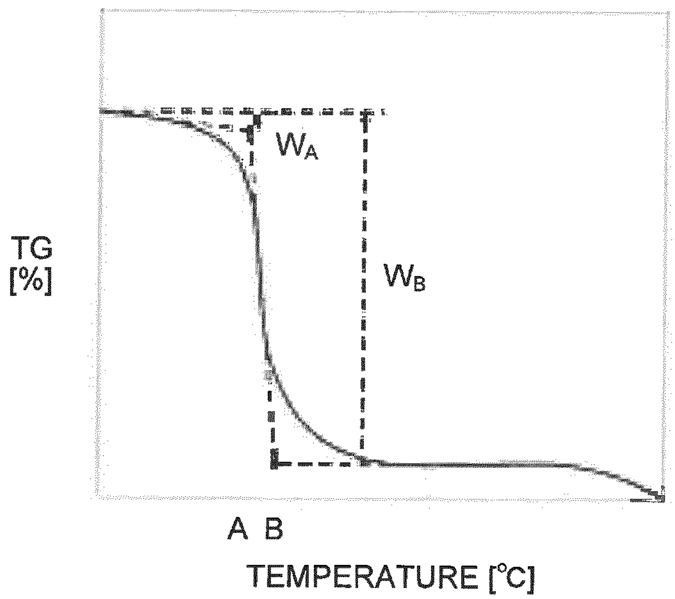

**INTERNATIONAL SEARCH REPORT**

International application No.
PCT/JP2019/049044

A. CLASSIFICATION OF SUBJECT MATTER
Int.Cl. C08B1/08(2006.01)i, C08B11/12(2006.01)i, H01M4/13(2010.01)i, H01M4/139(2010.01)i, H01M4/62(2006.01)i
FI: H01M4/62Z, H01M4/139, H01M4/13, C08B11/12, C08B1/08
According to International Patent Classification (IPC) or to both national classification and IPC

B. FIELDS SEARCHED
Minimum documentation searched (classification system followed by classification symbols)
Int.Cl. H01M4/62, H01M4/13, H01M4/139, C08B11/12, C08B1/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2018/062250 A1 (NIPPON PAPER INDUSTRIES CO., LTD.) 05 April 2018, paragraphs [0001], [0009], [0023]-[0041], [0079], [0080], [0088]-[0103], [0117], [0119], [0121], [0123], [0127], [0131], [0142], [0148] | 1-4, 6-7<br>5 |
| Y | JP 2016-058283 A (NISSAN MOTOR CO., LTD.) 21 April 2016, paragraphs [0001], [0015], [0032], [0033], [0082], [0083], [0086]-[0095], [0202]-[0209], [0256]-[0270], [0278]-[0284], [0286], [0287], [0290], tables 1-3 | 5 |
| A | JP 2017-149901 A (DAI ICHI KOGYO SEIYAKU CO., LTD.) 31 August 2017, paragraphs [0001], [0068]-[0071], [0082], table 1 | 1-7 |
| A | JP 2009-064564 A (SANYO ELECTRIC CO., LTD.) 26 March 2009, paragraphs [0020], [0021], [0026]-[0030], [0043]-[0060], [0075]-[0079], [0081], [0082] | 1-7 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07.01.2020 | 21.01.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2019/049044

| | | |
|---|---|---|
| WO 2018/062250 A1 | 05 April 2018 | EP 3521318 A1, paragraphs [0001], [0009], [0020]-[0038], [0078], [0079], [0087]-[0102], [0118]-[0121], [0123], [0126], [0138], [0144]<br>CN 109790227 A<br>KR 10-2019-0045256 A |
| JP 2016-058283 A | 21 April 2016 | (Family: none) |
| JP 2017-149901 A | 31 August 2017 | US 2019/0055323 A1, paragraphs [0001], [0111]-[0114], [0124]-[0126], table 1<br>WO 2017/145904 A1<br>EP 3421501 A1<br>TW 201800422 A<br>CN 108473594 A<br>KR 10-2018-0117611 A |
| JP 2009-064564 A | 26 March 2009 | US 2009/0317718 A1, paragraphs [0029], [0030], [0035]-[0039], [0049]-[0065], [0092]-[0096], [0098], [0099] |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018101628 A
- JP 2017068900 A